(19) Europäisches Patentamt
European Patent Office
Office européen des brevets

(11) **EP 1 998 249 A1**

(12) **EUROPEAN PATENT APPLICATION**
published in accordance with Art. 158(3) EPC

(43) Date of publication:
**03.12.2008 Bulletin 2008/49**

(51) Int Cl.:
**G06F 7/533** (2006.01)

(21) Application number: **07708203.0**

(22) Date of filing: **08.02.2007**

(86) International application number:
**PCT/JP2007/052179**

(87) International publication number:
**WO 2007/094223 (23.08.2007 Gazette 2007/34)**

(84) Designated Contracting States:
**DE FR GB**

(30) Priority: **15.02.2006 JP 2006038687**

(71) Applicant: **Panasonic Corporation**
**Kadoma-shi**
**Osaka 571-8501 (JP)**

(72) Inventor: **NAGANO, Kouichi**
**Osaka 540-6207 (JP)**

(74) Representative: **Ehlers, Jochen**
**Eisenführ, Speiser & Partner**
**Patentanwälte Rechtsanwälte**
**Postfach 10 60 78**
**28060 Bremen (DE)**

(54) **MULTIPLICATION CIRCUIT, DIGITAL FILTER, SIGNAL PROCESSING DEVICE, SYNTHESIS DEVICE, SYNTHESIS PROGRAM, AND SYNTHESIS PROGRAM RECORDING MEDIUM**

(57)    The conventional two's complement multiplier which is constituted by a Booth encoder, a partial production generation circuit, and an adder has a problem that the circuit scale would be increased because a bit extension is performed when the multiplier is adapted to an unsigned multiplication.

A multiplication circuit of the present invention is provided with a first Booth encoder (1) for encoding lower-order several bits of a multiplier according to first rules of encoding using a Booth algorithm, and a second Booth encoder (5) for encoding most-significant several bits of the multiplier according to second rules of encoding using a Booth algorithm, which are different from the first rules of encoding, and thereby the most-significant several bits of the multiplier are encoded using the Booth algorithm which is different from that for the lower-order several bits.

Fig.1

**Description**

TECHNICAL FIELD

The present invention relates to a multiplication circuit which performs multiplication of binary numbers, and more particularly, to a multiplication circuit which performs multiplication of a multiplicand by an unsigned multiplier.

BACKGROUND ART

A multiplication circuit is one of indispensable computing units which are used in almost all digital signal processings. When obtaining a multiplication between two's complements, a Booth algorithm is often used in order to reduce the number of partial products. The multiplication circuit using the Booth algorithm can usually reduce its circuit scale.
Further, also in an unsigned multiplication, it is possible to apply the Booth algorithm by extending sign bits of an input.
Up to now, a lot of patent applications have been filed for the constructions of multiplication circuits using the Booth algorithm (for example, refer to Patent Document 1, Patent Document 2, Patent Document 3, and Patent Document 4).

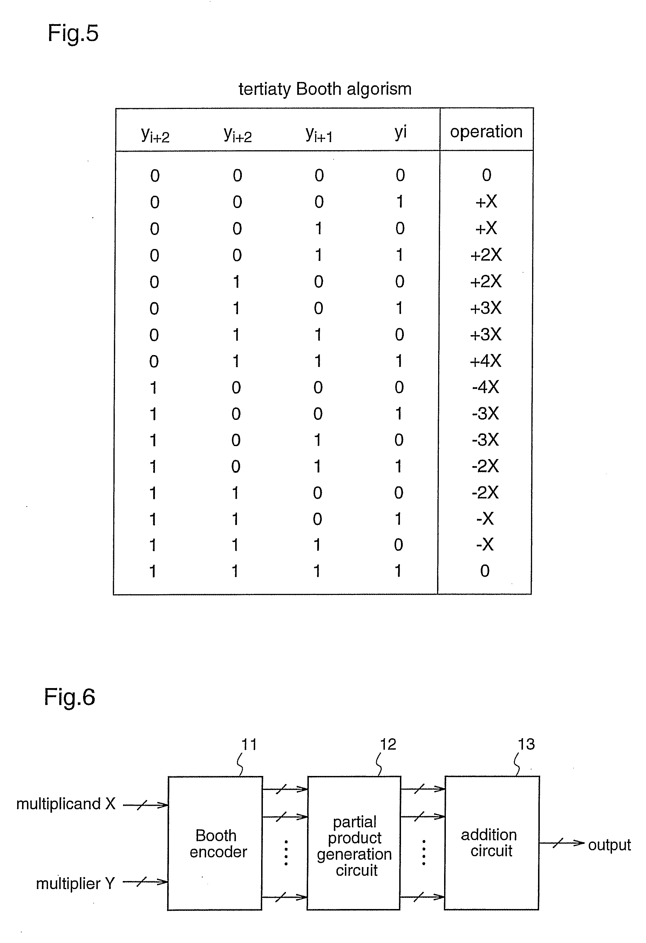

Figure 6 shows a conventional example of a multiplication circuit using the Booth algorithm. In figure 6, reference numeral 11 denotes a Booth encoder, numeral 12 denotes a partial product generation circuit, and numeral 13 denotes an addition circuit. Usually, input signals thereof are a multiplicand X which is a two's complement and a multiplier Y which is a two's complement.
Here, it is assumed that the Booth encoder 11 employs a secondary Booth algorithm. The multiplier Y is divided into each set of three bits with making one bit overlap each other, and the respective sets are encoded by the Booth encoder 11. For example, when it is assumed that the multiplier Y is a numeral "c" comprising six bits, which is denoted as (c5,c4,c3,c2,c1,c0) in sequence from the most significant bit, 0 is added behind the least significant bit c0, and the resultant sequence is divided into each three bits with making one bit overlap each other from the lower-order side to produce three sets of bits (c5,c4,c3), (c3,c2,c1), and (cl,c0,0), and then the respective sets are encoded by the Booth encoder.
When a two's complement expression format is adopted, the multiplier Y is expressed as follows:

$$Y = -y_n \cdot 2^{n-1} + \sum_{i=1}^{n-1} y_i \cdot 2^{i-1} \qquad \ldots (1)$$

where $y_n$ is a sign bit, and $y_{n-1}$ to $y_1$ are numerical portions.
Formula (1) is replaced as follows:

$$Y = -y_n \cdot 2^{n-1} + y_{n-1} \cdot 2^{n-2} + y_{n-2} \cdot 2^{n-3} + \ldots + y_1 \cdot 2^0$$
$$= (y_{n-2} + y_{n-1} - 2y_n) \cdot 2^{n-2} + (y_{n-4} + y_{n-3} - 2y_{n-2}) \cdot 2^{n-4} \ldots \qquad \ldots (2)$$
$$= \sum_{i=0}^{\frac{n}{2}-1} (y_{2i} + y_{2i+1} - 2y_{2i+2}) \cdot 2^{2i}$$

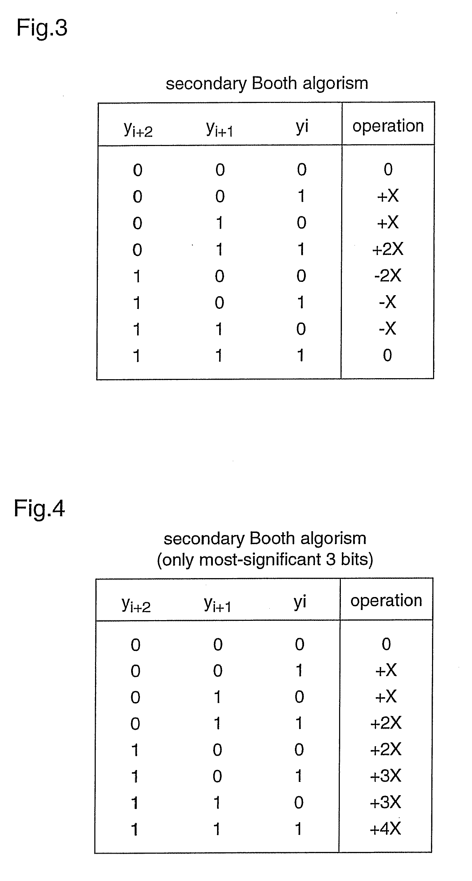

In formula (2), $(y_{2i}+y_{2i+1}-2y_{2i+2})$ has, as its object, the three bits included in each of the respective sets of bits that are divided as described above, and takes a value of +2, +1, 0, -1, or -2 according to the combination of the numerical values of bits.
When the secondary Booth algorithm is adopted as described above, the Booth encoder encodes the sets of bits of the multiplier which are divided into each three bits, according to the rules of encoding shown in an operation table of figure 3, and thereby produces +2X, +X, 0X, -X, or -2X as an operation method corresponding to the combination of the numerical values of bits. For example, assuming that the multiplier "c" (c5,c4,c3,c2,c1,c0) is (1,1,1,0,0,1), the Booth encoder 11 encodes the set of the most significant three bits (1,1,1) to 0X, the set of the next three bits (1,0,0) to -2X, and the set of the least significant three bits (0,1,0) to +X.

The partial product generation circuit 12 generates partial products using the operation methods which are the encoding results obtained by the Booth encoder 11 for the respective sets of bits into which the multiplier is divided. The addition circuit 13 performs addition of the plural partial product results which are the outputs of the partial product generation circuit 12, and thereby obtains the multiplication result of the multiplicand X and the multiplier Y.

As described above, the multiplication circuit shown in figure 6 adopts the Booth algorithm directed to a multiplication that multiplies a multiplicand by a multiplier which is a two's complement. However, when the Booth algorithm is used in a multiplication that multiplies a multiplicand by an unsigned multiplier, the multiplication circuit using the Booth algorithm shown in figure 6 can be used by performing a bit extension that adds a sign bit before the most significant bit of the unsigned multiplier Y.

Patent Document 1: Japanese Patent No.2597736
Patent Document 2: Japanese Published Patent Application No. Hei.5-241793
Patent Document 3: Japanese Published Patent Application No. Hei.8-314697
Patent Document 4: Japanese Published Patent Application No. Hei.9-101877

DISCLOSURE OF THE INVENTION

PROBLEMS TO BE SOLVED BY THE INVENTION

When the conventional multiplication circuit using the Booth algorithm is applied to a multiplication that multiplies a multiplicand by an unsigned multiplier, a bit extension that adds a sign bit before the most significant bit of the multiplier should be carried out, resulting in an increase in the circuit scale.

The present invention is made to solve the above-described problems and has for its object to provide a multiplication circuit which can reduce the circuit scale by applying the Booth algorithm without performing a bit extension that adds a sign bit to a multiplier in a multiplication that multiplies a multiplicand by an unsigned multiplier, and further, a synthesis device, a synthesis program, and a synthesis program recording medium for synthesizing the multiplication circuit.

MEASURES TO SOLVE THE PROBLEMS

According to Claim 1 of the present invention, there is provided a multiplication circuit which multiplies a multiplicand by a multiplier, comprising: a first Booth encoder for encoding lower-order several bits of the multiplier according to first rules of encoding using a Booth algorithm; a first partial product generation circuit for generating a partial product for the multiplication of the multiplicand and the multiplier, using the encoded result obtained by the first Booth encoder; a second Booth encoder for encoding most-significant several bits of the multiplier according to second rules of encoding using a Booth algorithm, which are different from the first rules of encoding; a second partial product generation circuit for generating a partial product for the multiplication of the multiplicand and the multiplier, using the encoded result obtained by the second Booth encoder; and an addition circuit for adding all of the single or plural partial products outputted from the first partial product generation circuit and the partial product outputted from the second partial product generation circuit.

Thereby, it is possible to realize a small-sized multiplication circuit which can perform a multiplication that multiplies a multiplicand by an unsigned multiplier using the Booth algorithm, without performing a bit extension that adds a sign bit to the multiplier.

Further, according to Claim 2 of the present invention, in the multiplication circuit defined in Claim 1, the multiplier is a fixed multiplier.

Thereby, it is possible to realize a small-sized multiplication circuit which can perform a multiplication that multiplies a multiplicand by an unsigned fixed multiplier using the Booth algorithm, without performing a bit extension that adds a sign bit to the multiplier.

Further, according to Claim 3 of the present invention, in the multiplication circuit defined in Claim 1, the multiplicand is an unsigned multiplicand, and the multiplier is an unsigned multiplier.

Thereby, it is possible to realize a small-sized multiplication circuit which can perform a multiplication that multiplies an unsigned multiplicand by an unsigned multiplier using the Booth algorithm, without performing a bit extension that adds a sign bit to the multiplier.

Further, according to Claim 4 of the present invention, in the multiplication circuit defined in Claim 1, the multiplicand is a signed multiplicand, and the multiplier is an unsigned multiplier.

Thereby, it is possible to realize a small-sized multiplication circuit which can perform a multiplication that multiplies a signed multiplicand by an unsigned multiplier using the Booth algorithm, without performing a bit extension that adds a sign bit to the multiplier.

Further, according to Claim 5 of the present invention, in the multiplication circuit defined in Claim 1, the first Booth encoder adopts a secondary Booth algorithm which encodes each three bits of the multiplier.

Thereby, it is possible to realize a small-sized multiplication circuit which can perform a multiplication that multiplies a multiplicand by an unsigned multiplier using the secondary Booth algorithm, without performing a bit extension that adds a sign bit to the multiplier.

Further, according to Claim 6 of the present invention, in the multiplication circuit defined in Claim 5, the operation of partial product generation by the second partial product generation circuit is an operation which multiplies the multiplicand by 0, 1, 2, 3 or 4.

Thereby, it is possible to realize a small-sized multiplication circuit which can perform a multiplication that multiplies a multiplicand by an unsigned multiplier using the secondary Booth algorithm, without performing a bit extension that adds a sign bit to the multiplier.

Further, according to Claim 7 of the present invention, in the multiplication circuit defined in Claim 1, the first Booth encoder uses a (N-1)-order Booth algorithm which encodes each N bits of the multiplier.

Thereby, it is possible to realize a small-sized multiplication circuit which can perform a multiplication that multiplies a multiplicand by an unsigned multiplier using the (N-1)-order Booth algorithm, without performing a bit extension that adds a sign bit to the multiplier.

Further, according to Claim 8 of the present invention, in the multiplication circuit defined in Claim 1, the addition circuit is a Wallace tree addition circuit.

Thereby, it is possible to realize a smaller-sized multiplication circuit which can perform a multiplication that multiplies a multiplicand by an unsigned multiplier using the secondary Booth algorithm, without performing a bit extension that adds a sign bit to the multiplier.

Further, according to Claim 9 of the present invention, the multiplication circuit defined in Claim 1 further includes a bit extension and distribution circuit which subjects the multiplier to a bit extension and a bit distribution, and outputs the most-significant several bits to the second Booth encoder while outputs the lower-order several bits to the first Booth encoder.

Thereby, it is possible to realize a small-sized multiplication circuit which can perform a multiplication that multiplies a multiplicand by an unsigned multiplier using the secondary Booth algorithm, without performing a bit extension that adds a sign bit to the multiplier.

Further, according to Claim 10 of the present invention, there is provided a multiplication circuit which multiplies a multiplicand by a multiplier, comprising: a first Booth encoder for encoding lower-order several bits of the multiplier according to first rules of encoding using a Booth algorithm; a first partial product generation circuit for generating a partial product for the multiplication of the multiplicand and the multiplier, using the encoded result obtained by the first Booth encoder; a second Booth encoder for encoding most-significant several bits of the multiplier according to second rules of encoding using a Booth algorithm, which are different from the first rules of encoding; a second partial product generation circuit for generating a partial product for the multiplication of the multiplicand and the multiplier, using the encoded result obtained by the second Booth encoder; a third Booth encoder for encoding the most-significant several bits of the multiplier according to the first rules of encoding; a third partial product generation circuit for generating a partial product for the multiplication of the multiplicand and the multiplier, using the encoded result obtained by the third Booth encoder; a selection circuit for selecting either of the partial product outputted from the second partial product generation circuit or the partial product outputted from the third partial product generation circuit according to whether the multiplier is a signed multiplier or an unsigned multiplier; and an addition circuit for adding all of the single or plural partial products outputted from the first partial product generation circuit and the partial product outputted from the selection circuit.

Thereby, it is possible to realize a small-sized multiplication circuit which can perform a multiplication that multiplies a multiplicand by a multiplier which is a two's complement and a multiplication that multiplies a multiplicand by an unsigned multiplier, using the secondary Booth algorithm without performing a bit extension that adds a sign bit to the multiplier.

Further, according to Claim 11 of the present invention, there is provided a digital filter having a unit which multiplies a multiplicand by a multiplier, wherein the unit which multiplies a multiplicand by a multiplier is constituted by a multiplication circuit as defined in Claim 1.

Thereby, it is possible to realize a digital filter using a small-sized multiplication circuit which can perform a multiplication that multiplies a multiplicand by an unsigned multiplier using the secondary Booth algorithm without performing a bit extension that adds a sign bit to the multiplier.

Further, according to Claim 12 of the present invention, there is provided a signal processing device which includes a multiplication circuit as defined in Claim 1, and performs a signal processing including a process of multiplying a multiplicand by a multiplier.

Thereby, it is possible to realize a signal processing device using a small-sized multiplication circuit which can perform a multiplication that multiplies a multiplicand by an unsigned multiplier using the secondary Booth algorithm without performing a bit extension that adds a sign bit to the multiplier.

Further, according to Claim 13 of the present invention, there is provided a device for synthesizing a multiplication circuit, which comprises a computer that synthesizes, by executing a program, a multiplication circuit that multiplies a multiplicand by a multiplier, and the multiplication circuit comprises: a first Booth encoder for encoding lower-order several bits of the multiplier according to first rules of encoding using a Booth algorithm; a first partial product generation circuit for generating a partial product for the multiplication of the multiplicand and the multiplier, using the encoded result obtained by the first Booth encoder; a second Booth encoder for encoding most-significant several bits of the multiplier according to second rules of encoding using a Booth algorithm, which are different from the first rules of encoding; a second partial product generation circuit for generating a partial product for the multiplication of the multiplicand and the multiplier, using the encoded result obtained by the second Booth encoder; and an addition circuit for adding all of the single or plural partial products outputted from the first partial product generation circuit and the partial product outputted from the second partial product generation circuit.

Thereby, it is possible to realize a synthesis device which can automatically synthesize a small-sized multiplication circuit which can perform a multiplication that multiplies a multiplicand by an unsigned multiplier using the secondary Booth algorithm without performing a bit extension that adds a sign bit to the multiplier.

According to Claim 14 of the present invention, in the device for synthesizing a multiplication circuit as defined in Claim 13, the addition circuit is a Wallace tree addition circuit.

Thereby, it is possible to realize a synthesis device which can automatically synthesize a small-sized multiplication circuit which can perform a multiplication that multiplies a multiplicand by an unsigned multiplier using the secondary Booth algorithm without performing a bit extension that adds a sign bit to the multiplier.

Further, according to Claim 15 of the present invention, there is provided a program for synthesizing a multiplication circuit which, by being executed by a computer, makes the computer synthesize the multiplication circuit defined in Claim 1.

Thereby, it is possible to realize a synthesis program which can automatically synthesize a small-sized multiplication circuit which can perform a multiplication that multiplies a multiplicand by an unsigned multiplier using the secondary Booth algorithm without performing a bit extension that adds a sign bit to the multiplier.

Further, according to Claim 16 of the present invention, there is provided a synthesis program recording medium which stores the program for synthesizing a multiplication circuit defined in Claim 15.

Thereby, it is possible to realize a synthesis program recording medium which can automatically synthesize a small-sized multiplication circuit which can perform a multiplication that multiplies a multiplicand by an unsigned multiplier using the secondary Booth algorithm without performing a bit extension that adds a sign bit to the multiplier.

EFFECTS OF THE INVENTION

According to a multiplication circuit of the present invention, when constituting a multiplication circuit having an unsigned multiplier input, it is constituted such that encoding for most-significant several bits is carried out using a Booth algorithm that is different from the Booth algorithm for encoding lower-order several bits. Therefore, it is possible to realize a small-sized multiplication circuit which can perform a multiplication that multiplies a multiplicand by an unsigned multiplier using the Booth algorithm without performing a bit extension that adds a sign bit to the multiplier.

Further, according to a synthesis device for a multiplication circuit, a synthesis program, and a synthesis program recording medium of the present invention, when synthesizing a multiplication circuit, encoding for most-significant several bits is carried out using a Booth algorithm that is different from the Booth algorithm for encoding lower-order several bits. Therefore, it is possible to realize a synthesis device, a synthesis program, and a synthesis program recording medium which can synthesize a small-sized multiplication circuit which can perform a multiplication that multiplies a multiplicand by an unsigned multiplier using the Booth algorithm without performing a bit extension that adds a sign bit to the multiplier.

BRIEF DESCRIPTION OF THE DRAWINGS

Figure 1 is a block diagram illustrating the construction of a multiplication circuit according to a first embodiment of the present invention.

Figure 2 is a block diagram illustrating the construction of a multiplication circuit according to a second embodiment of the present invention.

Figure 3 is a diagram illustrating an operation of the secondary Booth algorithm.

Figure 4 is a diagram illustrating an operation of the secondary Booth algorithm for most-significant three bits.

Figure 5 is a diagram illustrating an operation of the tertiary Booth algorithm.
Figure 6 is a block diagram illustrating the construction of the conventional multiplication circuit using the Booth algorithm.

DESCRIPTION OF REFERENCE NUMERALS

1 ... first Booth encoder
2 ... first partial product generation circuit
3 ... addition circuit
4 ... bit extension and distribution circuit
5 ... second Booth encoder
6 ... second partial product generation circuit
7 ... third Booth encoder
8 ... third partial product generation circuit
9 ... selection circuit

BEST MODE TO EXECUTE THE INVENTION

Hereinafter, embodiments of the present invention will be described with reference to the drawings.

(Embodiment 1)

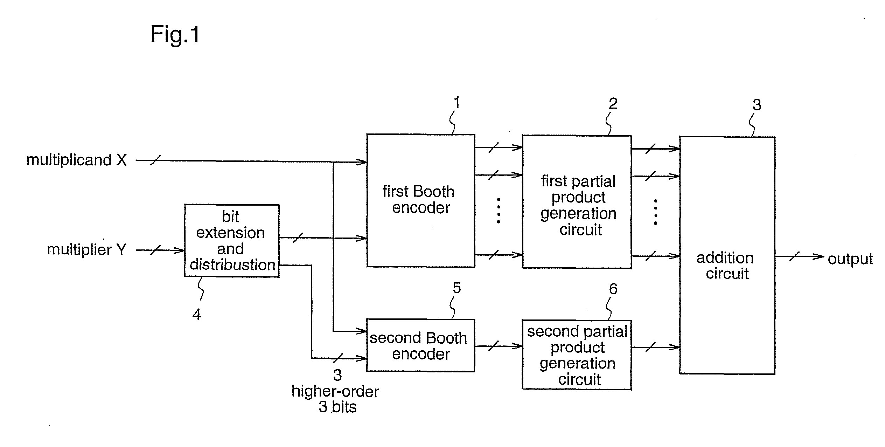

Hereinafter, a multiplication circuit according to a first embodiment of the present invention will be described with reference to figure 1.

Figure 1 is a block diagram illustrating a multiplication circuit which receives an unsigned multiplier as an input, according to the first embodiment of the present invention.

With reference to figure 1, reference numeral 1 denotes a first Booth encoder, numeral 2 denotes a first partial product generation circuit which generates partial products using the output of the first Booth encoder 1, numeral 5 denotes a second encoder, and numeral 6 denotes a second partial product generation circuit which generates a partial product using the output of the second Booth encoder 5. Further, reference numeral 3 denotes an addition circuit which adds the output of the first partial product generation circuit 2 and the output of the second partial product generation circuit 6, and numeral 4 denotes a bit extension and distribution circuit which performs a bit extension of an input multiplier and distributes the result to the first Booth encoder 1 and the second Booth encoder 5. As for the addition circuit 3, it is possible to miniaturize the same by adopting such as a multi-input Wallace tree adder.

The first Booth encoder 1 and the second Booth encoder 2 both employ the secondary Booth algorithm, and encode respective sets of bits which are obtained by dividing a multiplier Y into each three bits with making one bit overlap each other, according to predetermined rules of encoding.

While the multiplier Y is expressed by the above-described formula (1) when the two's complement expression format is adopted, it is expressed in an unsigned expression format as follows:

$$Y = \sum_{i=1}^{n} y_i \cdot 2^{i-1} \qquad \ldots (3)$$

where $y_n$ to $y_1$ are numerical portions.

Formula (3) is replaced as follows.

$$Y = y_n \cdot 2^{n-1} + y_{n-1} \cdot 2^{n-2} + y_{n-2} \cdot 2^{n-3} + \ldots + y_1 \cdot 2^0$$

$$= \left(y_{n-2} + y_{n-1} + 2y_n\right) \cdot 2^{n-2} + \left(y_{n-4} + y_{n-3} - 2y_{n-2}\right) \cdot 2^{n-4} \ldots \qquad \ldots (4)$$

$$= \left(y_{n-2} + y_{n-1} + 2y_n\right) \cdot 2^{n-2} + \sum_{i=0}^{\frac{n}{2}-2} \left(y_{2i} + y_{2i+1} - 2y_{2i+2}\right) \cdot 2^{2i}$$

In this formula (4), $(Y_{n-2}+Y_{n-1}+2Y_n)$ has, as its object, the three bits included in the set of the most significant bits among the sets of bits divided as described above, and takes a value of 0, 1, 2, 3 or 4 in accordance with the combination of the numerical values of bits, while $(y_{2i}+y_{2i+1}-2y_{2i+2})$ has, as its object, the three bits included in the set of bits other than the set of the most significant bits among the sets of bits divided as described above, and takes a value of +2, +1, 0, -1, or -2 in accordance with the combination of the numerical values of bits.

The multiplication circuit of this first embodiment employs the secondary Booth algorithm in the unsigned multiplication as described above, and the second Booth encoder 5 encodes the set of the most significant bits among the sets of bits of the multiplier which are divided into each three bits, according to the rules of encoding shown in the operation table of figure 4, thereby to generate 0X, 1X, 2X, 3X, or 4X as an operation method corresponding to the combination of the numerical values of bits, while the first Booth encoder 1 encodes the sets of bits other than the set of the most significant bits among the sets of bits of the multiplier which are divided into each three bits, according to the rules of encoding shown in the operation table of figure 3, thereby to generate +2X, +X, 0X, -X, or -2X as an operation method corresponding to the combination of the numerical values of bits.

Next, the operation of the multiplication circuit according to the first embodiment will be described.

In figure 1, the bit extension and distribution circuit 4 performs a bit extension according to the bit width of the multiplier Y, and divides the multiplier Y into each three bits with making one bit overlap each other. Then, the most significant three bits are outputted to the second Booth encoder 5 while the other (lower) bits are outputted to the first Booth encoder 1.

For example, it is assumed that the multiplier is a numeral "a" of unsigned six bits, which is denoted as (a5,a4,a3,a2,a1,a0) in sequence from the most significant bit. Then, the bit extension and distribution circuit 4 adds 0 behind the least significant bit a0, and divides the multiplier into each three bits with making one bit overlap each other from the lower-order side, thereby performing a bit extension and a bit distribution to provide (a5,a4,a3), (a3,a2,a1), and (a1,a0,0) as the respective sets of bits. Then, the set of the most significant bits (a5,a4,a3) is outputted to the second Booth encoder 5, while the sets of the other bits (a3,a2,a1) and (a1,a0,0) are outputted to the first Booth encoder 1.

While the bit extension and distribution circuit 4 divides the multiplier into each three bits with making one bit overlap each other from the lower-order side, if the last set, i.e., the most significant part, does not become a set of three bits, 0 is added before the most significant bit to generate a set of the most significant three bits. For example, it is assumed that the multiplier Y is a numeral "b" of unsigned seven bits, which is denoted as (b6,b5,b4,b3,b2,b1,b0) in sequence from the most significant bit. Then, the bit extension and distribution circuit 4 adds 0 behind the least significant bit b0 and divides the multiplier into each three bits with making one bit overlap each other from the lower-order side, thereby performing a bit extension and a bit distribution to generate the respective sets of bits (0,b6,b5), (b5,b4,b3), (b3,b2,b1), and (b1,b0,0).

The first Booth encoder 1 encodes the sets of bits other than the set of the most significant bits among the sets of bits of the multiplier which are divided into each three bits, according to the rules of encoding shown in the operation table of figure 3, thereby to generate +2X, +X, 0X, -X, or -2X as an operation method corresponding to the combination of the numerical values of bits, and the first partial product generation circuit 2 generates partial products using the operation method that is the encoding result obtained by the first Booth encoder 1. On the other hand, the second Booth encoder 5 encodes the set of the most significant bits among the sets of bits of the multiplier which are divided into each three bits, according to the rules of encoding shown in the operation table of figure 4, thereby to generate 0X, +X, +2X, +3X or +4X as an operation method corresponding to the combination of the numerical values of bits, and the second partial product generation circuit 6 generates a partial product using the operation method that is the encoding result obtained by the second Booth encoder 5. Then, the addition circuit 3 adds the plural outputs of the partial product generation circuit 2 and the output of the partial product generation circuit 6 to obtain the multiplication result of the multiplicand X and the multiplier Y.

As described above, according to the multiplication circuit of the first embodiment, it is constructed such that the lower-order several bits of the multiplier are encoded by the first Booth encoder 1 according to the first rules of encoding using the Booth algorithm, partial products are generated by the first partial product generation circuit 2 using the output of the first Booth encoder, the most-significant several bits of the multiplier are encoded by the second Booth encoder 5 according to the second rules of encoding using the Booth algorithm which are different from the first rules of encoding, a partial product is generated by the second partial product generation circuit 6 using the output of the second Booth encoder 5, and the partial products outputted from the first partial product generation circuit 2 and the partial product outputted from the second partial product generation circuit 6 are added by the addition circuit 3. Therefore, it is possible to realize a multiplication circuit which can perform an unsigned multiplication by using the Booth algorithm, without performing a bit extension that adds a sign bit to the multiplier.

Besides, the multiplication circuit according to the first embodiment may be realized by a special-purpose hardware. Alternatively, instead of being realized by a special-purpose hardware, it may be realized by a synthesis device which comprises a general-purpose computer and synthesizes the multiplication circuit of this first embodiment by executing a program. In the case of realizing the multiplication circuit of the first embodiment by such synthesis device, a synthesis program which, when executed by a computer, makes the computer synthesize the multiplication circuit of the first embodiment may be recorded in an information recording medium such as a CD, and the synthesis device comprising the computer reads the synthesis program from the recording medium to execute the same, thereby synthesizing the multiplication circuit of the first embodiment.

Further, the multiplication circuit of this first embodiment can be used to constitute a signal processing device which performs a signal processing including a multiplication process that multiplies a multiplicand by an unsigned multiplier, and further, it can also be used as a multiplication unit in a digital filter, which multiplies a multiplicand by an unsigned multiplier.

(Embodiment 2)

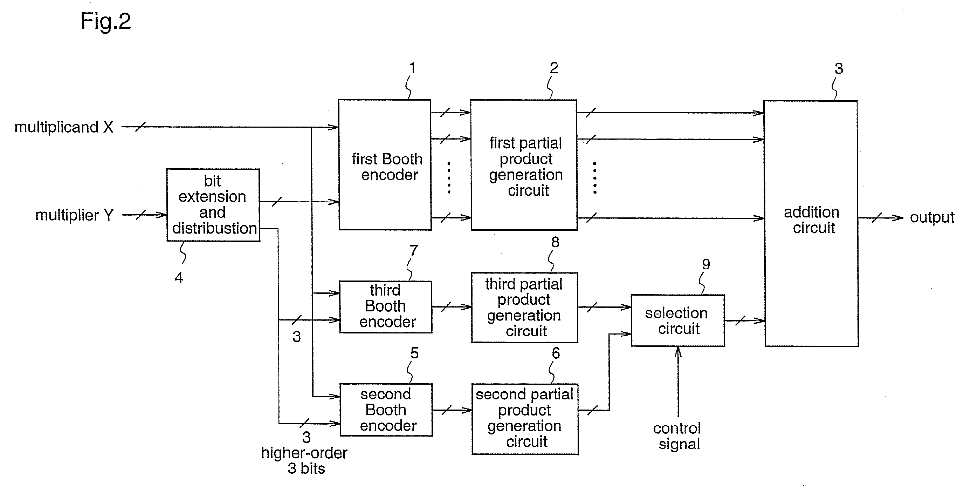

A multiplication circuit according to a second embodiment of the present invention will be described with reference to figure 2.

Figure 2 is a block diagram illustrating a multiplication circuit according to the second embodiment, which receives an unsigned multiplier as an input. In figure 2, the same reference numerals as those shown in figure 1 denote the same or corresponding parts. Reference numeral 7 denotes a third Booth encoder which encodes an input signal according to the same rules of encoding as those for the first Booth encoder, numeral 8 denotes a third partial product generation circuit which generates a partial product using an output of the third Booth encoder 7, and numeral 9 denotes a selection circuit which selects and outputs either of the output of the second partial product generation circuit 6 or the output of the third partial product generation circuit 8.

In figure 2, a difference from the multiplication circuit of the first embodiment shown in figure 1 resides in that the third Booth encoder 7, the third partial product generation circuit 8, and the selection circuit 9 are added.

Next, the operation of the multiplication circuit of the second embodiment will be described.

With reference to figure 2, the bit extension and distribution circuit 4 performs a bit extension according to the bit width of the multiplier Y, and divides the multiplier into each three bits with making one bit overlap each other. Then, the most significant three bits are outputted to the second Booth encoder 5 and the third Booth encoder 7, while the other (lower) bits are outputted to the first Booth encoder 1.

For example, it is assumed that the multiplier is a numeral "a" of unsigned six bits, which is denoted as (a5,a4,a3,a2,a1,a0) in sequence from the most significant bit. Then, the bit extension and distribution circuit 4 adds 0 behind the least significant bit a0, and divides the multiplier into each three bits with making one bit overlap each other from the lower-order side, thereby performing a bit extension and a bit distribution to generate the respective sets of bits (a5,a4,a3), (a3,a2,a1), and (a1,a0,0). Then, the set of the most significant bits (a5,a4,a3) is outputted to the second Booth encoder 5 and the third Booth encoder 7, while the sets of the other bits (a3,a2,a1) and (a1,a0,0) are outputted to the first Booth encoder 1.

The first Booth encoder 1 encodes the sets of bits other than the set of the most significant bits among the sets of bits of the multiplier which are divided into each three bits, according to the rules of encoding shown in the operation table of figure 3, thereby to generate +2X, +X, 0X, -X, or -2X as an operation method corresponding to the combination of the numerical values of bits, and the first partial product generation circuit 2 generates partial products using the operation method which is the encoding result obtained by the first Booth encoder. On the other hand, the second Booth encoder 5 encodes the set of the most significant bits among the sets of bits of the multiplier which are divided into each three bits, according to the rules of encoding shown in the operation table of figure 4, thereby to generate 0X, +X, +2X, +3X, or +4X as an operation method corresponding to the combination of the numerical values of bits, and the second partial product generation circuit 6 generates a partial product using the operation method which is the encoding result obtained by the second Booth encoder 5. Further, the third Booth encoder 7 encodes the set of the most significant bits among the sets of bits of the multiplier which are divided into each three bits, according to the rules of encoding shown in the operation table of figure 3 in like manner as the first Booth encoder 1, thereby to generate +2X, +X, 0X, -X, or -2X as an operation method corresponding to the combination of the numerical values of bits, and the third partial product generation circuit 8 generates a partial product using the operation method which is the encoding result obtained by the third Booth encoder.

The selection circuit 9 outputs either of the output of the second partial product generation circuit 6 or the output of the third partial product generation circuit 8 according to whether the multiplier Y is a two's complement or an unsigned multiplier. That is, the selection circuit 9 selects the output of the second partial product generation circuit 6 and outputs the same when the multiplier Y is an unsigned number, while it selects the output of the third partial product generation circuit 8 and outputs the same when the multiplier Y is a two's complement. The addition circuit 3 receives and adds the plural outputs of the first partial product generation circuit 2 and the output of the selection circuit 9 to obtain the multiplication result of the multiplicand X and the multiplier Y. Thereby, in the multiplication circuit of the second embodiment, the addition circuit 3 can obtain the multiplication result of the multiplicand X and the multiplier Y by the multiplication using the Booth algorithm based on the above-described formula (4) when the multiplier Y is an unsigned number, while it can obtain the multiplication result by the multiplication using the Booth algorithm based on the above-described formula (2) when the multiplier Y is a two's complement.

As described above, according to the multiplication circuit of this second embodiment, it is constructed such that the lower-order several bits of the multiplier are encoded by the first Booth encoder 1 according to the first rules of encoding using the Booth algorithm, partial products are generated by the first partial product generation circuit 2 using the output of the first Booth encoder, the most-significant several bits of the multiplier are encoded by the second Booth encoder 5 according to the second rules of encoding using the Booth algorithm which are different from the first rules of encoding, a partial product is generated by the second partial product generation circuit 6 using the output of the second Booth encoder 5, the most-significant several bits of the multiplier are encoded by the third Booth encoder 7 according to the first rules of encoding, a partial product is generated by the third partial product generation circuit 8 using the output of the third Booth encoder 8, either of the partial product outputted from the second partial product generation circuit 6 or the partial product outputted from the third partial product generation circuit 8 is selected by the selection circuit 9 according to whether the multiplier is a signed multiplier or an unsigned multiplier, and the partial outputs outputted from the first partial product generation circuit 2 and the partial product outputted from the selection circuit 9 are all added by the addition circuit 3 to be outputted. Thereby, it is possible to realize a small-sized multiplication circuit which can perform a multiplication that multiplies a multiplicand by a two's complement and a multiplication that multiplies a multiplicand by an unsigned multiplier, using the Booth algorithm without performing a bit extension that adds a sign bit to the multiplier.

While in the above-described first and second embodiments the case where a multiplication is performed using the secondary Booth algorithm is described, the present invention is also applicable to a multiplication using a tertiary Booth algorithm which encodes the sets of bits of a multiplier that are divided into each four bits according to the rules of encoding shown in figure 5, or a multiplication using a higher-order Booth algorithm.

APPLICABILITY IN INDUSTRY

The multiplication circuit according to the present invention adopts a construction in which the most significant several bits of a multiplier are encoded using a Booth algorithm that is different from one for encoding the lower-order several bits, and thereby makes it possible to realize a small-sized multiplication circuit which can perform a multiplication that multiplies a multiplicand by an unsigned multiplier using the Booth algorithm without performing a bit extension that adds a sign bit to the multiplier, and therefore, it is quite effective as a multiplication circuit used in such as an arithmetic and logic unit or a digital filter. Further, it can be utilized as a fundamental operation device for every digital signal processing, including uses in an optical information recording apparatus and uses for communication and the like.

**Claims**

1. A multiplication circuit which multiplies a multiplicand by a multiplier, comprising:

  a first Booth encoder for encoding lower-order several bits of the multiplier according to first rules of encoding using a Booth algorithm;
  a first partial product generation circuit for generating a partial product for the multiplication of the multiplicand and the multiplier, using the encoded result obtained by the first Booth encoder;
  a second Booth encoder for encoding most-significant several bits of the multiplier according to second rules of encoding using a Booth algorithm, which are different from the first rules of encoding;
  a second partial product generation circuit for generating a partial product for the multiplication of the multiplicand and the multiplier, using the encoded result obtained by the second Booth encoder; and
  an addition circuit for adding all of the single or plural partial products outputted from the first partial product generation circuit and the partial product outputted from the second partial product generation circuit.

**2.** A multiplication circuit as defined in Claim 1, wherein said multiplier is a fixed multiplier.

**3.** A multiplication circuit as defined in Claim 1, wherein said multiplicand is an unsigned multiplicand, and said multiplier is an unsigned multiplier.

**4.** A multiplication circuit as defined in Claim 1, wherein said multiplicand is a signed multiplicand, and said multiplier is an unsigned multiplier.

**5.** A multiplication circuit as defined in Claim 1, wherein said first Booth encoder adopts a secondary Booth algorithm which encodes each three bits of the multiplier.

**6.** A multiplication circuit as defined in Claim 5, wherein the operation of partial product generation by the second partial product generation circuit is an operation which multiplies the multiplicand by 0, 1, 2, 3 or 4.

**7.** A multiplication circuit as defined in Claim 1, wherein said first Booth encoder uses a (N-1)-order Booth algorithm which encodes each N bits of the multiplier.

**8.** A multiplication circuit as defined in Claim 1, wherein said addition circuit is a Wallace tree addition circuit.

**9.** A multiplication circuit as defined in Claim 1 further including a bit extension and distribution circuit which subjects the multiplier to a bit extension and a bit distribution, and outputs the most-significant several bits to the second Booth encoder while outputs the lower-order several bits to the first Booth encoder.

**10.** A multiplication circuit which multiplies a multiplicand by a multiplier, comprising:

a first Booth encoder for encoding lower-order several bits of the multiplier according to first rules of encoding using a Booth algorithm;
a first partial product generation circuit for generating a partial product for the multiplication of the multiplicand and the multiplier, using the encoded result obtained by the first Booth encoder;
a second Booth encoder for encoding most-significant several bits of the multiplier according to second rules of encoding using a Booth algorithm, which are different from the first rules of encoding;
a second partial product generation circuit for generating a partial product for the multiplication of the multiplicand and the multiplier, using the encoded result obtained by the second Booth encoder;
a third Booth encoder for encoding the most-significant several bits of the multiplier according to the first rules of encoding;
a third partial product generation circuit for generating a partial product for the multiplication of the multiplicand and the multiplier, using the encoded result obtained by the third Booth encoder;
a selection circuit for selecting either of the partial product outputted from the second partial product generation circuit or the partial product outputted from the third partial product generation circuit according to whether the multiplier is a signed multiplier or an unsigned multiplier; and
an addition circuit for adding all of the single or plural partial products outputted from the first partial product generation circuit and the partial product outputted from the selection circuit.

**11.** A digital filter having a unit which multiplies a multiplicand by a multiplier, wherein said unit which multiplies a multiplicand by a multiplier is constituted by a multiplication circuit as defined in Claim 1.

**12.** A signal processing device including a multiplication circuit as defined in Claim 1, and performing a signal processing including a process of multiplying a multiplicand by a multiplier.

**13.** A device for synthesizing a multiplication circuit, which comprises a computer that synthesizes, by executing a program, a multiplication circuit that multiplies a multiplicand by a multiplier, said multiplication circuit comprising:

a first Booth encoder for encoding lower-order several bits of the multiplier according to first rules of encoding using a Booth algorithm;
a first partial product generation circuit for generating a partial product for the multiplication of the multiplicand and the multiplier, using the encoded result obtained by the first Booth encoder;
a second Booth encoder for encoding most-significant several bits of the multiplier according to second rules of encoding using a Booth algorithm, which are different from the first rules of encoding;

a second partial product generation circuit for generating a partial product for the multiplication of the multiplicand and the multiplier, using the encoded result obtained by the second Booth encoder; and
an addition circuit for adding all of the single or plural partial products outputted from the first partial product generation circuit and the partial product outputted from the second partial product generation circuit.

14. A device for synthesizing a multiplication circuit as defined in Claim 13, wherein said addition circuit is a Wallace tree addition circuit.

15. A program for synthesizing a multiplication circuit which, by being executed by a computer, makes the computer synthesize the multiplication circuit defined in Claim 1.

16. A synthesis program recording medium which stores the program for synthesizing a multiplication circuit defined in Claim 15.

# Fig.1

EP 1 998 249 A1

Fig.2

## Fig.3

secondary Booth algorism

| $y_{i+2}$ | $y_{i+1}$ | yi | operation |
|---|---|---|---|
| 0 | 0 | 0 | 0 |
| 0 | 0 | 1 | +X |
| 0 | 1 | 0 | +X |
| 0 | 1 | 1 | +2X |
| 1 | 0 | 0 | -2X |
| 1 | 0 | 1 | -X |
| 1 | 1 | 0 | -X |
| 1 | 1 | 1 | 0 |

## Fig.4

secondary Booth algorism
(only most-significant 3 bits)

| $y_{i+2}$ | $y_{i+1}$ | yi | operation |
|---|---|---|---|
| 0 | 0 | 0 | 0 |
| 0 | 0 | 1 | +X |
| 0 | 1 | 0 | +X |
| 0 | 1 | 1 | +2X |
| 1 | 0 | 0 | +2X |
| 1 | 0 | 1 | +3X |
| 1 | 1 | 0 | +3X |
| 1 | 1 | 1 | +4X |

## Fig.5

tertiaty Booth algorism

| $y_{i+2}$ | $y_{i+2}$ | $y_{i+1}$ | $y_i$ | operation |
|---|---|---|---|---|
| 0 | 0 | 0 | 0 | 0 |
| 0 | 0 | 0 | 1 | +X |
| 0 | 0 | 1 | 0 | +X |
| 0 | 0 | 1 | 1 | +2X |
| 0 | 1 | 0 | 0 | +2X |
| 0 | 1 | 0 | 1 | +3X |
| 0 | 1 | 1 | 0 | +3X |
| 0 | 1 | 1 | 1 | +4X |
| 1 | 0 | 0 | 0 | -4X |
| 1 | 0 | 0 | 1 | -3X |
| 1 | 0 | 1 | 0 | -3X |
| 1 | 0 | 1 | 1 | -2X |
| 1 | 1 | 0 | 0 | -2X |
| 1 | 1 | 0 | 1 | -X |
| 1 | 1 | 1 | 0 | -X |
| 1 | 1 | 1 | 1 | 0 |

## Fig.6

multiplicand X ——→ | Booth encoder (11) | ... | partial product generation circuit (12) | ... | addition circuit (13) | ——→ output

multiplier Y ——→

## INTERNATIONAL SEARCH REPORT

| | International application No. |
|---|---|
| | PCT/JP2007/052179 |

| A. CLASSIFICATION OF SUBJECT MATTER |
|---|
| *G06F7/533(2006.01)i* |
| According to International Patent Classification (IPC) or to both national classification and IPC |

| B. FIELDS SEARCHED |
|---|
| Minimum documentation searched (classification system followed by classification symbols) |
| G06F7/533 |
| Documentation searched other than minimum documentation to the extent that such documents are included in the fields searched |
| Jitsuyo Shinan Koho      1922-1996   Jitsuyo Shinan Toroku Koho   1996-2007<br>Kokai Jitsuyo Shinan Koho   1971-2007   Toroku Jitsuyo Shinan Koho   1994-2007 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X | JP 8-63338 A (NEC Corp.),<br>08 March, 1996 (08.03.96), | 1-5,7-9,<br>11-16 |
| A | Claims 1 to 3; Par. Nos. [0017] to [0032]<br>(Family: none) | 6,10 |
| A | JP 2000-187584 A (Fuji Electric Co., Ltd.),<br>04 July, 2000 (04.07.00),<br>(Family: none) | 1-16 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 February, 2007 (27.02.07) | 06 March, 2007 (06.03.07) |
| Name and mailing address of the ISA/ | Authorized officer |
| Japanese Patent Office | |
| Facsimile No. | Telephone No. |

Form PCT/ISA/210 (second sheet) (April 2005)

**EP 1 998 249 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2597736 B
- JP HEI5241793 B
- JP HEI8314697 B
- JP HEI9101877 B